(19) Europäisches Patentamt
European Patent Office
Office européen des brevets

(11) **EP 4 012 402 B1**

(12) **FASCICULE DE BREVET EUROPEEN**

(45) Date de publication et mention de la délivrance du brevet:
**04.10.2023 Bulletin 2023/40**

(21) Numéro de dépôt: **21212170.1**

(22) Date de dépôt: **03.12.2021**

(51) Classification Internationale des Brevets (IPC):
**G01N 29/44** *(2006.01)*     **G01N 29/04** *(2006.01)*
**G01N 29/06** *(2006.01)*

(52) Classification Coopérative des Brevets (CPC):
**G01N 29/30; G01N 29/043; G01N 29/0654;**
**G01N 29/4463; G01N 29/4472; G01N 29/52;**
G01N 2291/0425; G01N 2291/0427

(54) **IMAGERIE DE GUIDES D'ONDES ÉLASTIQUES INTERCONNECTÉS PAR UNE JONCTION**

BILDGEBUNG VON ELASTISCHEN WELLENLEITERN, DIE DURCH EINEN ÜBERGANG MITEINANDER VERBUNDEN SIND

IMAGING FOR ELASTIC WAVE GUIDES INTERCONNECTED BY A JOINT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.12.2020 FR 2012832**

(43) Date de publication de la demande:
**15.06.2022 Bulletin 2022/24**

(73) Titulaires:
• **Commissariat à l'Energie Atomique et aux Energies Alternatives**
**75015 Paris (FR)**
• **École Nationale Supérieure de Techniques Avancées**
**91120 Palaiseau (FR)**

(72) Inventeurs:
• **RECOQUILLAY, Arnaud**
**91191 GIF-SUR-YVETTE CEDEX (FR)**
• **FRITSCH, Jean-François**
**91191 GIF-SUR-YVETTE (FR)**
• **BOURGEOIS, Laurent**
**91370 VERRIERES-LE-BUISSON (FR)**

(74) Mandataire: **Atout PI Laplace**
**Immeuble "Visium"**
**22, avenue Aristide Briand**
**94117 Arcueil Cedex (FR)**

(56) Documents cités:
• **BARONIAN VAHAN ET AL: "Linear sampling method applied to non destructive testing of an elastic waveguide: theory, numerics and experiments", INVERSE PROBLEMS, vol. 34, no. 7, 1 juillet 2018 (2018-07-01), page 075006, XP055830848, GB ISSN: 0266-5611, DOI: 10.1088/1361-6420/aac21e**
• **Recoquillay Arnaud .: "Méthodes d'échantillonnage appliquées à l'imagerie de défauts dans un guide d'ondes élastiques", Physique mathématique [math-ph]. Université Paris Saclay (COmUE),, 1 janvier 2018 (2018-01-01), pages 1-221, XP055830835, Extrait de l'Internet: URL:https://pastel.archives-ouvertes.fr/tel-01712219/document [extrait le 2021-08-09]**
• **Bourgeois Laurent ET AL: "Imaging junctions of waveguides", , 11 mai 2020 (2020-05-11), pages 1-31, XP055830997, DOI: 10.3934/ipi.2020065ï¿¿ Extrait de l'Internet: URL:https://hal.inria.fr/hal-02567182/docu ment [extrait le 2021-08-09]**

**EP 4 012 402 B1**

**Description**

L'invention concerne le domaine du contrôle non destructif de structures mécaniques ou contrôle de santé intégré et plus précisément les méthodes d'imagerie de telles structures ayant pour objectif de détecter la présence de défauts et de les imager.

L'invention porte plus précisément sur une méthode d'imagerie de guides d'ondes élastiques interconnectés par une jonction. La structure est composée d'un ou plusieurs guides de section constante, les guides étant interconnectés au moyen d'une jonction de forme quelconque.

Par exemple, la structure à imager est constituée de plusieurs rails ou de plusieurs tubes ou tuyaux soudés entre eux. L'invention s'applique également à l'imagerie médicale dans l'objectif d'imager les os du corps. L'invention s'applique aussi à une structure composée d'un guide d'onde de section constante connecté à un embout terminal de forme quelconque.

La méthode d'imagerie par échantillonnage linéaire ou « Linear sampling method » LSM permet de réaliser une imagerie par ondes guidées à haute fréquence contrairement aux méthodes d'imagerie usuelles qui sont souvent limitées à des fréquences plus faibles.

En effet, la méthode dite LSM modale exploite tous les modes de propagation guidés contrairement à d'autres méthodes d'imagerie qui sont basées sur la sélection d'un mode particulier.

Un problème général à résoudre consiste à adapter cette méthode d'imagerie pour imager des structures de type guides d'ondes élastiques interconnectés par des jonctions de forme quelconque et sans avoir accès à l'intérieur de la structure.

Les références [1] et [2] décrivent l'application de la méthode d'imagerie LSM modale dans le cas d'une structure en deux dimensions de type plaque ou guide de section constante. Cependant la méthode décrite ne prend pas en compte le cas de plusieurs guides connectés par une jonction de forme quelconque.

La référence [3] développe des principes théoriques applicables à des jonctions de guides d'ondes mais uniquement pour des ondes acoustiques et en supposant pouvoir émettre des modes guidés et mesurer les ondes diffractées correspondantes sur des sections du guide, donc de pouvoir avoir accès à la section du guide, ce qui n'est pas toujours possible.

La référence [4] décrit par ailleurs une méthode de propagation analytique de champs élastiques dans des guides d'ondes présentant une perturbation, applicable aux champs de référence pour des jonctions de guides d'ondes.

La présente invention porte sur une méthode d'imagerie basée sur la méthode d'imagerie LSM modale applicable à des jonctions de guides d'ondes élastiques. La méthode présente l'avantage de pouvoir imager à haute fréquence des structures de formes complexes à partir de capteurs positionnés uniquement sur la surface de la structure.

L'invention a pour objet une méthode d'imagerie d'une structure composée d'au moins un guide d'onde connecté à une jonction, la structure supportant des modes de propagation guidée d'ondes élastiques, la structure comportant au moins un défaut, la méthode comprenant les étapes suivantes :

- Pour au moins une fréquence de fonctionnement, acquérir plusieurs mesures de signaux se propageant dans la structure au moyen d'une pluralité de couples de capteurs d'ondes élastiques non-colocalisés, les mesures étant organisées dans une matrice de mesures $\mathcal{M}$ de dimensions égales au nombre de capteurs émetteur par le nombre de capteurs récepteur,

- Déterminer une pluralité de modes de propagation guidée par la structure,

- Corriger les mesures à partir de signaux ultrasonores mesurés ou simulés pour la même structure en l'absence de défaut,

- Convertir la matrice de mesures $\mathcal{M}$ en une matrice de diffraction de champs d'ondes U,

- Déterminer en chaque point d'une grille d'échantillonnage un vecteur de test F caractéristique de la structure sans défaut, dont les composantes sont les projections d'un tenseur de Green du domaine sans défaut sur les fonctions transverses des modes de propagation guidée,

- Appliquer une méthode d'inversion numérique pour déterminer un vecteur H de composantes modales tel que U.H=F en chaque point d'une grille d'échantillonnage,

- Déterminer une image de la structure à partir du vecteur H.

Selon un aspect particulier de l'invention, la matrice de diffraction U est déterminée au moyen de la relation

$$\mathcal{M} = -\mathcal{R}U\mathcal{E}$$ avec $\mathcal{R}$ une matrice dont les coefficients sont déterminés par la projection d'une fonction de réception d'un capteur sur les modes de propagation guidée et $\varepsilon$ une matrice dont les coefficients sont déterminés par la projection d'une fonction d'émission d'un capteur sur les modes de propagation guidée.

Selon un aspect particulier de l'invention, le vecteur de test F est déterminé en :

- Calculant des champs d'onde de référence correspondant à des sommes de champs d'onde incidents et de champs d'onde diffractés par la jonction en l'absence de défaut dans la structure,

- Déterminant le vecteur de test F à partir des champs d'onde de référence calculés.

Selon un aspect particulier de l'invention, les champs d'onde de référence sont calculés au moyen d'une résolution numérique par éléments finis.

Selon un aspect particulier de l'invention, les champs d'onde de référence sont calculés au moyen d'une résolution numérique par éléments finis dans une zone définie par la jonction puis sont propagés analytiquement dans chaque guide d'onde.

Selon un aspect particulier de l'invention, les champs d'onde de référence dans chaque guide d'onde sont calculés à partir des champs d'onde de référence dans la jonction au moyen des étapes suivantes :

- Déterminer les champs d'onde diffractés par la jonction à partir des champs d'onde de référence,

- Propager les champs d'onde diffractés par la jonction dans chaque guide d'onde en calculant la somme des modes de propagation guidée pondérés par les coefficients modaux des champs d'onde diffractés,

- Déterminer les champs d'onde de référence dans chaque guide d'onde comme la somme des champs d'onde diffractés propagés et des modes de propagation guidée.

Selon un aspect particulier de l'invention, l'image de la structure est déterminée à partir de l'inverse de la norme du vecteur H en tout point de la structure à imager.

Selon un aspect particulier de l'invention, les étapes de la méthode sont exécutées pour plusieurs fréquences de fonctionnement.

Selon un aspect particulier de l'invention, l'imagerie de la structure est déterminée à partir d'une somme des normes au carré des vecteurs H calculés pour différentes fréquences de fonctionnement, en tout point de la structure à imager.

Selon un aspect particulier de l'invention, les capteurs d'ondes élastiques sont positionnés à la surface de la structure ou intégrés à la structure.

L'invention a aussi pour objet un dispositif d'imagerie comprenant un réseau de capteurs d'ondes élastiques destinés à être positionnés sur une structure à imager et une unité de traitement apte à recevoir les signaux acquis par les capteurs et configurée pour exécuter les étapes de la méthode d'imagerie selon l'invention.

Selon un aspect particulier de l'invention, les capteurs d'ondes élastiques sont choisis parmi des transducteurs piézoélectriques, des transducteurs acoustiques électromagnétiques ou des capteurs à réseau de Bragg sur fibre optique.

Selon un aspect particulier de l'invention, les capteurs d'ondes élastiques sont positionnés à la surface de la structure ou intégrés à la structure.

D'autres caractéristiques et avantages de la présente invention apparaîtront mieux à la lecture de la description qui suit et s'appuyant sur les dessins annexés suivants.

[Fig. 1] la figure 1 représente une structure composée de trois guides d'ondes et d'une jonction,

Fig. 2] la figure 2 représente un schéma illustrant des modes de propagation dans un guide d'ondes élastiques,

[Fig. 3] la figure 3 représente un organigramme détaillant les étapes de mise en oeuvre d'un mode de réalisation de la méthode objet de l'invention,

[Fig. 4] la figure 4 représente un exemple d'imagerie obtenue pour une structure composée de trois guides d'ondes interconnectés par une jonction,

[Fig. 5] la figure 5 représente un schéma illustrant un mode de réalisation particulier de l'invention.

L'invention a pour objectif de fournir une méthode d'imagerie pour des structures composées de guides d'ondes de sections constantes connectés entre eux par une jonction de forme quelconque.

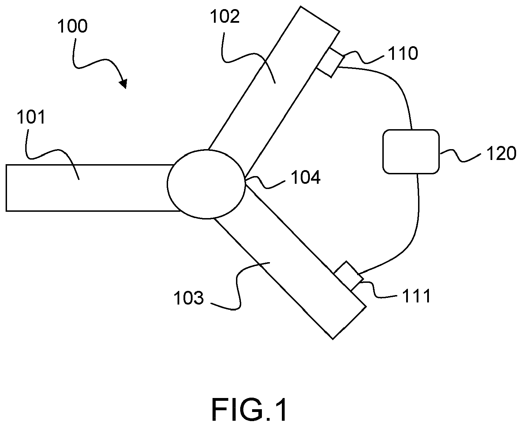

Un exemple d'une structure 100 à imager est représenté schématiquement sur la figure 1 en vue de dessus. Cette structure est composée de trois guides d'ondes 101,102,103 identiques ayant chacun une section constante. Les trois tubes sont interconnectés au moyen d'une jonction 104 de forme quelconque (sphérique pour l'exemple de la figure 1).

Sans sortir du cadre de l'invention, le nombre de guides d'ondes peut être quelconque. La structure peut aussi être composée d'un seul guide d'onde connecté à une extrémité à un embout de forme quelconque. Les sections des guides peuvent être de formes variables (circulaires, rectangulaires, carrées, ou de forme quelconque), les matériaux les constituant peuvent être différents également.

On rappelle tout d'abord quelques notions concernant les guides d'ondes élastiques.

Un guide d'onde est généralement modélisé, sous forme mathématique, par le produit d'une section bornée $\Sigma$ et d'un axe supposé infini. En pratique, la longueur du guide n'est pas infinie mais une modélisation utilisant les ondes guidées est valable tant que la longueur du guide selon son axe est grande par rapport au diamètre de la section. Cette propriété est vraie notamment pour des structures de type rails ou tuyaux.

Les ondes ultrasonores élastiques se propageant dans ces structures peuvent être décomposées en plusieurs modes de propagation guidés.

Chaque mode guidé peut être modélisé par le produit d'une fonction de la variable transverse définie dans la section (appelée fonction transverse) et d'une fonction de la variable axiale définissant la position suivant l'axe du guide.

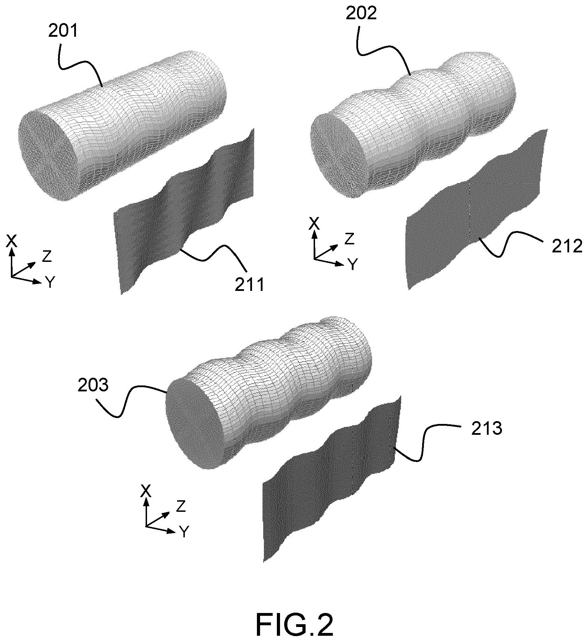

La figure 2 schématise plusieurs exemples de modes guidés dans une structure ayant la forme d'un tube pour une onde harmonique en temps, de fréquence angulaire $\omega$. Les exemples donnés se généralisent au régime transitoire par une transformée de Fourier par rapport au temps.

Les exemples de la figure 2 correspondent à des modes guidés de type torsion (201), compression (202) et flexion (203). Pour chaque mode, on représente la fonction selon une coupe du guide 211,212,213 et le mode guidé 201,202,203 résultant du produit de la fonction transverse et de la fonction axiale.

La fonction axiale du guide est de la forme $e^{\pm i\beta nz}$, avec $z$ la coordonnée selon l'axe du guide, $\beta_n$ le nombre d'onde du mode $n$ et le signe +/- dépendant de la direction de propagation du mode. En fonction des valeurs de $\beta_n$, il existe trois types de modes :

- les modes propagatifs, pour lesquels $\beta_n$ est un nombre réel et donc le mode est purement oscillant selon l'axe ;

- les modes évanescents pour lesquels $\beta_n$ est imaginaire pur et donc le mode croît ou décroît exponentiellement selon l'axe en fonction du signe de la partie imaginaire de $\beta_n$ ;

- les modes inhomogènes pour lesquels $\beta_n$ est complexe. Ils sont également exponentiellement croissants ou décroissants en fonction du signe de la partie imaginaire de $\beta_n$.

La théorie des ondes élastiques guidées montre qu'il existe un nombre fini de modes propagatifs à une fréquence $\omega$ donnée.

Comme la prise en compte de la physique ou, de manière équivalente, des conditions de radiation, implique que les autres modes sont exponentiellement décroissants, la connaissance des composantes modales d'un champ ondulatoire selon les seuls modes propagatifs permet de décrire ce champ en tout point suffisamment éloigné de la source du champ pour des guides d'ondes sans atténuation.

Dans le cas où l'atténuation le long du guide n'est pas négligeable, on prend en compte les modes inhomogènes pour lesquels la partie imaginaire du nombre d'onde est faible.

Pour décrire les fonctions transverses et la méthode LSM élastodynamique, il est nécessaire d'introduire des variables mixtes X,Y telles que définies dans le document [4], panachant des composantes du champ de déplacement et des composantes du tenseur des contraintes.

Pour le champ de déplacement $u$, dans le guide $r$ notons $t^r$ sa contrainte axiale, à savoir :

$$t^r = \sigma(\mathrm{u})e_3^r,$$

Où $e_3^r$ désigne le vecteur unitaire de l'axe du guide r.

Nous introduisons alors les variables $X^r$ et $Y^r$

$$\mathcal{X}^r(u) = \begin{pmatrix} t_1^r \\ t_2^r \\ u_3^r \end{pmatrix}$$

$$\mathcal{Y}^r(u) = \begin{pmatrix} u_1^r \\ u_2^r \\ -t_3^r \end{pmatrix}.$$

On définit par ailleurs $\mathcal{X}_n^l$, respectivement $\mathcal{Y}_n^l$, la variable *X*, respectivement la variable *Y*, de la fonction transverse associée au mode *n* du guide *l*. Cette notation est sans ambiguité étant donné que le mode *n* du guide *l* n'est défini que dans le guide *l*.

Lorsqu'on cherche à imager une structure pour identifier des défauts internes (domaine du contrôle non destructif), on s'intéresse aux champs diffractés par ce défaut. Le champ diffracté est le champ obtenu après soustraction du champ incident, qui est le champ se propageant en l'absence de défaut. La somme du champ diffracté et du champ incident est appelée champ total.

Le champ diffracté par un défaut dans un guide d'ondes peut s'exprimer en fonction des différents modes. Plus précisément, tous les champs pouvant s'exprimer sur une base modale (base définie par les modes), le défaut peut être caractérisé par la diffraction des différents modes, représentée dans une matrice de diffraction.

On peut donc définir la matrice de diffraction S comme la projection des champs diffractés associés aux différents modes incidents sur les fonctions transverses associées aux différents modes, et ce suivant les directions de propagation dans les guides. La matrice de diffraction présente donc quatre blocs dans un guide simple, correspondant respectivement à un champ incident se propageant dans le sens des coordonnées axiales croissantes, respectivement décroissantes, pour un champ diffracté se propageant dans le sens des coordonnées axiales croissantes, respectivement décroissantes. Nous avons donc deux blocs en transmission et deux blocs en réflexion.

La matrice de diffraction S permet de décrire la diffraction par le défaut d'un champ incident quelconque.

Le cas de deux guides se généralise facilement à N guides avec N strictement supérieur à 2, en définissant les $N^2$ blocs de la matrice de diffraction, ces blocs correspondant aux champs diffractés se propageant dans les N guides pour les différents champs incidents se propageant dans ces N guides.

Dans le cas d'un guide 101 connecté à une jonction 104 (comme représenté à la figure 1), la diffraction de la jonction et du défaut sont traitées séparément. On considère d'une part le champ total associé à la jonction 104 en l'absence de défaut pour un mode incident. Ce champ total est appelé champ de référence et noté $u_n^{j,ref}$ pour le n-ème mode incident $u_n^j$ du guide *j*. Il correspond à la somme du champ incident et du champ diffracté sur la jonction 104.

D'autre part, si on considère la présence d'un défaut dans la structure 100, ce défaut génère également un champ diffracté. Le champ diffracté par le défaut correspond à la diffraction par le défaut du champ de référence.

Le document [1] décrit l'application d'une méthode de résolution numérique dite méthode LSM (Linear Sampling Method) à l'imagerie de guides d'ondes élastiques. Cette méthode est basée sur la matrice de diffraction S qui correspond à la projection, sur les fonctions transverses des modes des différents guides, des différents champs diffractés associés aux champs de référence, autrement dit les champs diffractés associés au seul défaut à imager.

Notons que la méthode LSM est applicable aussi bien quand tous les blocs de la matrice sont accessibles que lorsque seuls certains blocs le sont, à savoir quand seuls certains champs de référence ont été émis et certains champs diffractés ont été mesurés.

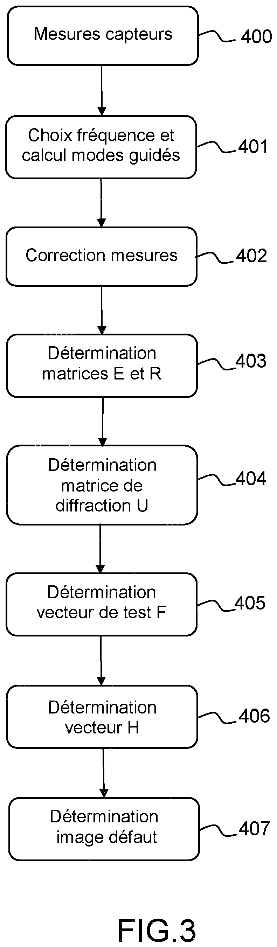

La figure 3 décrit, sur un organigramme, les étapes de mise en oeuvre d'une méthode d'imagerie d'une structure du type décrit à la figure 1.

L'invention est mise en oeuvre au moyen de capteurs d'ondes ultrasonores élastiques 110,111.

Les capteurs sont choisis parmi des transducteurs piézoélectriques, des transducteurs acoustiques électromagnétiques (par exemple de type EMAT ou patchs magnétostrictifs) ou des capteurs à réseau de Bragg sur fibre optique.

Les capteurs 110,111 peuvent être positionnés sur la surface de la structure ou intégrés à celle-ci en des endroits choisis suffisamment éloignés des défauts et de la jonction.

Chaque capteur 110,111 est relié à une chaine d'acquisition de signal et l'ensemble des capteurs sont reliés à une unité de traitement 120 qui est configurée pour exécuter la méthode d'imagerie selon l'un des modes de réalisation de l'invention.

L'unité de traitement 120 peut être réalisée sous forme logicielle et/ou matérielle à partir d'un processeur et une mémoire. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

Les résultats fournis par l'unité de traitement peuvent être affichés sur un écran d'ordinateur ou directement sur une interface faisant partie du dispositif.

Pour imager une zone d'inspection de la structure 100, les capteurs peuvent être agencés de part et d'autre ou seulement d'un côté de la zone à imager. Leurs positions peuvent être déterminées aléatoirement ou selon un motif régulier.

Chaque capteur peut cumuler à la fois la fonction d'émetteur et de récepteur ou seulement l'une des deux fonctions.

La méthode objet de l'invention débute par une première étape 400 d'acquisition de mesures de signaux ultrasonores par les différents capteurs agissant en tant que capteurs récepteurs. Différentes méthodes d'acquisition peuvent être envisagées, par exemple une acquisition séquentielle au cours de laquelle chaque émetteur génère successivement une onde élastique dans la structure et une mesure du signal propagé est réalisée par tous les récepteurs pour chaque onde élastique émise.

Dans une deuxième étape 401, on applique ensuite une transformée de Fourier temporelle aux mesures, et on détermine les différents modes guidés à partir de la structure de référence par une méthode numérique, par exemple une méthode de type « SAFE ».

La méthode objet de l'invention est applicable pour une ou plusieurs fréquences de la bande passante. On sélectionne donc à l'étape 401 une fréquence d'intérêt.

Dans une étape suivante 402, on soustrait aux mesures des signaux de correction, correspondant aux signaux ultrasonores acquis dans la même configuration sur la structure 100 mais en l'absence de défaut. Ces signaux peuvent être obtenus par exemple par une mesure sur la structure 100 saine, sans défaut, ou par un calcul éléments finis ou par simulation Dans ce dernier cas, on utilise les modes guidés déterminés à l'étape 401 pour obtenir ces signaux.

Les mesures sont regroupées dans une matrice $\mathcal{M}$ dont les lignes correspondent aux émissions et les colonnes correspondent aux récepteurs. Chaque mesure est constituée d'une séquence d'échantillons obtenus pour une durée d'acquisition prédéterminée. Autrement dit, les mesures sont caractérisées par trois dimensions : l'indice de l'émetteur, l'indice du récepteur et l'indice de l'échantillon temporel.

Dans une variante de réalisation, plusieurs émetteurs peuvent émettre des signaux simultanément. De façon générale, la séquence de mesures peut être réalisée de diverses façons en faisant varier le séquencement et le nombre des émissions, des réceptions et aussi la durée d'acquisition. En particulier, les émissions peuvent être simultanées ou successives par plusieurs capteurs.

Pour appliquer la méthode d'imagerie LSM modale, il faut pouvoir déterminer la matrice de diffraction correspondant au défaut à identifier dans la structure. La méthode la plus naturelle pour l'obtenir est alors d'émettre successivement chaque mode guidé et de mesurer les composantes modales des champs diffractés correspondants.

Cette méthode est difficile à appliquer en pratique : les coefficients modaux étant les projections des champs sur les fonctions transverses des modes dans la section du guide, il est nécessaire d'avoir accès à cette dernière pour les calculer.

De même, pour des applications concrètes, il n'est pas réaliste d'émettre chaque mode séparément.

Une solution proposée dans la référence [2] consiste à établir un lien entre des mesures acquises à la surface du guide d'ondes et la matrice de diffraction. Le principe est le suivant : considérons un ensemble de sources et de récepteurs positionnés à la surface du guide d'ondes. Les nombres, positions et types (piézoélectrique, EMAT...) des capteurs agissant en tant que sources peuvent être identiques ou différents de ceux agissant en tant que récepteurs. Les sources et les récepteurs sont supposés être éloignés du défaut selon l'axe. Dans ces conditions, il est possible de décomposer les champs mesurés par les récepteurs pour chaque source comme des combinaisons des modes guidés, et de ne retenir dans cette combinaison que les contributions des modes propagatifs, les autres contributions s'étant, par hypothèse, atténuées avant d'atteindre les capteurs.

A partir des enseignements du document [1] on montre que la matrice de diffraction S, et même directement la matrice du système LSM U, peut être obtenue à partir de la matrice de mesure $\mathcal{M}$ grâce à l'inversion de deux matrices d'émission $\varepsilon$ et de réception $\mathcal{R}$ grâce à la relation suivante :

$$\mathcal{M} = -\mathcal{R}U\mathcal{E}. \tag{1}$$

Les matrices d'émission $\varepsilon$ et de réception $\mathcal{R}$ ne dépendent que des modes guidés, et des sources et récepteurs. Notons que le nombre de sources et de récepteurs peut être supérieur au nombre de modes propagatifs, les matrices R et $\varepsilon$ sont rectangulaires en général, le système devant alors être résolu au sens des moindres carrés.

Dans une étape 403 de la méthode, on détermine donc les matrices d'émission $\varepsilon$ et de réception $\mathcal{R}$ de la façon suivante.

Plus précisément, considérons le cas où les capteurs sont tous positionnés sur la surface d'un même guide $l$, notons $\Gamma_l$ sa surface. Le cas où les sources et les récepteurs sont répartis sur différents guides ou sont intégrés aux guides s'en déduit directement.

Considérons un nombre $M_r$ de récepteurs et un nombre $M_e$ d'émetteurs, ayant des fonctions de réception et d'émission respectives $f_n^r, n = 1, ..., M_r$ et $f_n^e, n = 1, ..., M_e$, les supports de ces fonctions étant définis sur la surface du guide $\Gamma_l$. Les fonctions de réception et d'émission sont définies par les caractéristiques des capteurs (leur type, la puissance d'émission...).

Notons que ces fonctions sont vectorielles, afin de représenter une sensibilité différente aux différentes composantes du champ d'onde, en déplacement ou en contrainte, émis ou reçu par un capteur. Les coefficients des matrices $\mathcal{R}$ et $\varepsilon$ ont alors pour expression :

$$R_{ij} = \int_{\Gamma_I} f_i^r(x) . \begin{pmatrix} x_j^l \\ y_j^l \end{pmatrix} dx$$

$$E_{ij} = \int_{\Gamma_I} f_j^e(x) . \begin{pmatrix} x_i^l \\ y_i^l \end{pmatrix} dx$$

Avec $\begin{pmatrix} x_j^l \\ y_j^l \end{pmatrix}$ le i-ème mode du guide I, écrit en variables mixtes $XY$, qui dépend des caractéristiques du guide.

Dans le cas où les capteurs sont positionnés sur différents guides (par exemple les guides 101,102,103 dans l'exemple de la figure 1), les matrices $\mathcal{R}$ et $\varepsilon$ sont construites par blocs, les blocs extra-diagonaux étant nuls. En effet, on voit dans les expressions précédentes que, pour la matrice R, chaque ligne correspond à un capteur alors que chaque colonne correspond à un mode guidé. C'est toujours le cas dans le cas de capteurs positionnés sur plusieurs guides, mais les modes guidés correspondent aux différents guides. Ainsi, le coefficient correspondant à l'intégrale pour un capteur sur un premier guide pour un mode associé à un autre guide est nul. Cette analyse est aussi valable pour la matrice $\varepsilon$ en inversant les lignes et les colonnes.

Ainsi, la matrice d'émission $\varepsilon$ a pour dimensions le produit de la somme du nombre d'émetteurs sur chaque guide par la somme du nombre de modes guidés propagatifs dans chaque guide. La matrice de réception R a pour dimensions le produit de la somme du nombre de récepteurs sur chaque guide par la somme du nombre de modes guidés propagatifs dans chaque guide.

Dans une étape 404, on résout ensuite l'équation (2), par exemple au sens des moindres carrés, pour déterminer la matrice U :

$$U = -(\mathcal{R}^*\mathcal{R})^{-1}\mathcal{R}^*\mathcal{M}\mathcal{E}^*(\mathcal{E}\mathcal{E}^*)^{-1},$$

Où $\cdot^*$ désigne l'opérateur conjugué complexe.

En pratique la matrice U dépend directement de la matrice de diffraction S.

Par abus de langage, on considère par la suite que la matrice U correspond à la matrice de diffraction S, les deux matrices différant en pratique d'une multiplication par une matrice diagonale ne dépendant que des modes guidés.

La méthode de résolution numérique LSM est une méthode d'inversion qui consiste à inverser un système de la forme :

$$UH(x) = F(x) \quad (3)$$

U est la matrice de diffraction déterminée à l'étape 404 qui ne contient que les contributions des champs diffractés par le défaut à imager.

H(x) est un vecteur de composantes modales à déterminer en tout point x d'une grille d'échantillonnage définissant la zone à imager. En d'autres termes, H(x) est lié à l'image obtenue par la méthode objet de l'invention. Il s'agit d'un vecteur que l'on cherche à déterminer pour imager la structure.

F(x) est un vecteur qui dépend des caractéristiques de la structure à imager sans défaut, c'est-à-dire la structure saine. Ce vecteur peut être calculé en simulant la propagation des modes guidés dans la structure sans défaut. Autrement dit, F(x) correspond à la réponse théorique de la structure sans défaut.

Les composantes de ce vecteur sont les projections du tenseur de Green du domaine (qui correspond à la structure sans défaut), sur les fonctions transverses des modes guidés.

Ainsi, dans le cas d'une structure composée de N guides élastiques interconnectés entre eux au moyen d'une jonction et possédant chacun $P_n$ modes propagatifs, $1 \leq n \leq N$, le vecteur F s'écrit sous la forme :

$$F(x) = \begin{pmatrix} -\left( G(\cdot, x)p, \begin{pmatrix} x_j^I \\ y_j^I \end{pmatrix} \right)_{\Sigma_I} \\ \vdots \\ -\left( G(\cdot, x)p, \begin{pmatrix} x_{P_N}^N \\ y_{P_N}^N \end{pmatrix} \right)_{\Sigma_N} \end{pmatrix} \quad (4)$$

Où G désigne le tenseur de Green généralisé en variables $XY$, tel que défini dans [2], $\begin{pmatrix} x_m^r \\ y_m^r \end{pmatrix}$ désigne la m-ème fonction transverse du guide r, et $(\cdot, \cdot)_{\Sigma_r}$ une forme bilinéaire, où $\Sigma_r$ désigne la section d'observation dans le guide $r$ :

$$\left( \begin{pmatrix} \mathcal{X}^r(u) \\ \mathcal{Y}^r(u) \end{pmatrix}, \begin{pmatrix} \mathcal{X}^r(v) \\ \mathcal{Y}^r(v) \end{pmatrix} \right)_{\Sigma_r} = \int_{\Sigma_r} (\mathcal{X}^r(u).\mathcal{Y}^r(v) + \mathcal{X}^r(v).\mathcal{Y}^r(u))dx,$$

$p$ est un vecteur unitaire de polarisation. Le tenseur de Green généralisé étant de taille 6x6, ce paramètre de polarisation p permet de définir six fonctions F indépendantes en choisissant une composante de $p$ égale à 1 et les autres à 0, par exemple $p = (1,0,0,0,0,0)$.

Dans le cas des ondes élastiques, les champs d'onde sont vectoriels et la fonction de Green correspond à un tenseur d'ordre 2.

Le tenseur de Green s'écrit en fonction des champs de référence.

On définit la notion de champ de référence $u_n^{j,ref}$ correspondant à la réponse de la structure en l'absence de défaut, au mode guidé incident n du guide j. Le champ de référence correspond au champ total diffracté par la structure sans défaut comme expliqué en préambule.

Les champs de référence sont déterminés comme étant la solution du système d'équations suivant :

$$\begin{aligned} \mathrm{div}\sigma(u_m^{r,ref}) + \rho\omega^2 u_m^{r,ref} &= 0 \text{ dans } W \\ \sigma(u_m^{r,ref})v &= 0 \text{ sur } \partial W \\ u_m^{r,ref} - u_m^r \text{ est sortant,} \end{aligned} \quad (5)$$

Avec div l'opérateur divergence, $\sigma$ le tenseur des contraintes défini par la loi de Hooke,

$$\sigma(u) = \frac{C}{2}(\nabla u + \nabla u^T)$$ , où $C$ est le tenseur de Hooke, $\rho$ la masse volumique, $\omega$ la fréquence angulaire, W désigne la structure sans défaut, v la normale sortante à *W* et *u* le champ de déplacement.

La condition « $u_m^{r,ref} - u_m^r$ est sortant » est nécessaire car, sans elle, les deux premières équations admettent deux solutions libres, correspondant respectivement à une onde se propageant de l'infini vers la jonction et à une onde se propageant de la jonction vers l'infini. La physique du problème commande de ne retenir que la solution allant de la jonction vers l'infini, correspondant à une onde diffractée par la jonction et donc « sortante ».

Par ailleurs, les modes guidés dans chaque guide r (hors jonction) sont définis comme le produit d'une fonction de la variable transverse locale $x_s^r$ et d'une fonction oscillante et/ou exponentiellement décroissante de la variable axiale locale $x_3^r$.

Le système d'équations (5) peut être résolu par une méthode éléments finis, en utilisant des conditions aux limites artificielles équivalentes à la condition de radiation. Ces conditions aux limites impliquent des opérateurs agissant sur les variables mixtes *XY* tel que défini dans le document [4]. On obtient ainsi par résolution numérique les champs de référence $u_m^{r,ref}$.

On détermine ensuite le vecteur F(x) à partir des champs de référence au moyen du développement suivant.

La condition « $u_m^{r,ref} - u_m^r$ um est sortant » devient

$$\mathcal{X}^l(u_m^{r,ref} - u_m^r) = T^l(\mathcal{Y}^l(u_m^{r,ref} - u_m^r))$$

Sur $\Sigma_l$, $l = 1, ..., N$.

L'opérateur $T^l$ est alors défini comme

$$T^l(\mathcal{Y}^l) = \sum_{n \in \mathbb{N}}(\mathcal{X}_n^l, \mathcal{Y}^l)_{\Sigma_l} \mathcal{X}_n^l . \text{ (6)}$$

On peut alors montrer, grâce à la symétrie du tenseur de Green, que le vecteur F(x) s'exprime à partir des champs de référence selon l'expression suivante :

$$F(x) = \begin{pmatrix} \begin{pmatrix} \mathcal{X}^I(u_1^{I,ref}(x)) \\ \mathcal{Y}^I(u_1^{I,ref}(x)) \end{pmatrix} \cdot p \dfrac{e^{i\beta_1^I R^1}}{2} \\ \vdots \\ \begin{pmatrix} \mathcal{X}^N(u_1^{N,ref}(x)) \\ \mathcal{Y}^N(u_1^{N,ref}(x)) \end{pmatrix} \cdot p \dfrac{e^{i\beta_{P_N}^N R^N}}{2} \end{pmatrix} \text{ (7)}$$

En pratique, le choix de la polarisation n'a qu'une faible influence sur le résultat de l'imagerie pour des défauts d'intérieur non vide. $\beta_m^r$ est le nombre d'onde du mode m du guide *r*, $R^r$ est la coordonnée selon l'axe du guide r de la section $\Sigma_r$ et $u_m^{r,ref}$ le champ de référence associé au mode *m* du guide *r*.

En résumé, le vecteur F(x) peut être déterminé au moyen de la relation (7) en ayant au préalable calculé les champs de référence (champs diffractés par la structure en l'absence de défauts) par résolution du système (5).

Après avoir déterminé le vecteur F(x) à l'étape 405, on calcule enfin le vecteur final H(x) (à l'étape 406) en inversant l'équation (3).

Le vecteur final H est calculé pour chaque position x de la grille d'échantillonnage, pour une fréquence angulaire $\omega$ et pour une polarisation p.

Dans une étape finale 407, on détermine une fonction indicatrice d'un défaut, par exemple sous la forme :

$$\varphi(x) = \log\left(\frac{1}{||H(x)||}\right).$$

Dans une variante de réalisation, si la méthode est appliquée pour plusieurs fréquences angulaires, la fonction indicatrice peut être exprimée par la relation suivante :

$$\varphi(x;p) = -\frac{1}{2}\log\left(\sum_\omega \frac{||H(x;\omega,p)||^2}{\max_{\tilde{x}}||H(\tilde{x};\omega,p)||^2}\right).$$

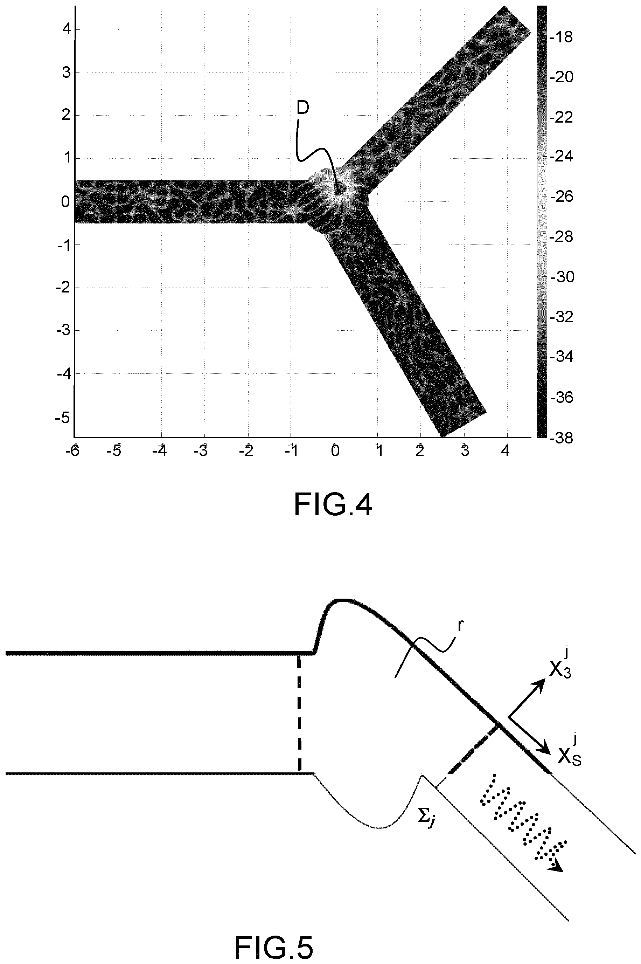

La figure 4 illustre un résultat d'imagerie obtenu par la méthode objet de l'invention pour une structure du type de la figure 1 présentant un défaut D.

On décrit à présent une variante de réalisation du calcul des champs de référence $u_m^{r,ref}$ permettant ensuite d'optimiser le temps de calcul du vecteur F(x).

Une difficulté inhérente à la méthode LSM modale généralisée aux jonctions de guides est le besoin de calculer numériquement les champs de référence pour chaque point de la zone à imager afin de calculer le vecteur F(x). En effet, comme expliqué précédemment, ce calcul nécessite de résoudre numériquement le système d'équations (5) dans chaque guide r relié à la jonction.

Dans le cas de guides d'ondes acoustiques en deux dimensions, le coût de calcul supplémentaire n'est pas forcément problématique. Pour des cas élastiques ou en trois dimensions, ce coût peut devenir prohibitif si la zone à imager est grande.

Pour pallier cet inconvénient, une solution est de coupler la résolution du problème numérique à une propagation analytique des champs de référence. En effet, lors du calcul des champs de référence grâce aux équations (5) le domaine de calcul coïncide avec la zone d'échantillonnage pour la méthode LSM, délimitée par les sections $\Sigma_l$.

La solution proposée ici consiste à définir les sections $\Sigma_l$ proches de la jonction pour le calcul éléments finis, puis de propager analytiquement le champ de référence obtenu pour les guides de section constante.

Soit un champ de référence $u_m^{r,ref}$ (associé à la structure sans défaut pour le mode incident m dans le guide r) et soit $u^{scat}$ le champ diffracté par la jonction sans défaut. $u^{scat} = u_m^{r,ref} - u_m^r$ dans le guide r défini par la structure telle que représentée sur la figure 6. $u^{scat} = u_m^{r,ref}$ $u^{scat}$ dans le reste du guide (hors jonction).

Où $u_m^{r,ref}$ est la solution de (5). Le champ de référence $u_m^{r,ref}$ a été calculé dans le domaine éléments finis. Nous définissons les coefficients modaux du champ diffracté :

$$A_n^l = \left(\mathcal{X}_n^l, \mathcal{Y}^l(u^{scat})\right)_{\Sigma_l}.$$

Notons que le calcul par éléments finis réalisé fournit presque directement la variable $\mathcal{y}^l(u^{scat})$ : en effet, le calcul éléments finis fournit $\mathcal{Y}^l\left(u_m^{r,ref}\right)$ grâce à l'utilisation des opérateurs $T^l$, et la variable $\mathcal{Y}_m^r$ est obtenue dans le calcul des modes par résolution numérique, par exemple par une méthode SAFE.

Pour un point x appartenant au guide j, situé de l'autre côté de la section $\Sigma_j$ par rapport à la jonction, de coordonnées $x_j$ dans le repère local du guide j tel qu'illustré sur la figure 5, on a

$$u^{scat}(x) = \sum_n A_n^j u_n^j (x_j).$$

Il est donc possible de propager analytiquement les champs diffractés en dehors de la zone éléments finis, c'est-à-dire en dehors de la zone couverte par la jonction. Pour revenir aux champs de référence, il suffit alors d'y ajouter le mode incident dans les guides correspondants (le guide r pour le champ $u_m^{r,ref}$ ), qui est connu car ne dépendant pas de la jonction.

Une fois les modes calculés par une méthode telle que SAFE et le problème élément fini résolu dans une zone limitée autour de la jonction, les valeurs des champs de référence aux autres points de la grille d'échantillonnage se déduisent donc par un calcul analytique de propagation du champ incident et du champ diffracté par la perturbation, peu coûteux en temps de calcul et en mémoire.

A partir des calculs approximés des champs de référence, on calcule ensuite le vecteur F(x) et on applique les étapes 405,406,407 de la méthode décrite précédemment.

Références

[1] Vahan Baronian, Laurent Bourgeois, Bastien Chapuis, Arnaud Recoquillay, Linear Sampling Method applied to Non Destructive Testing of an elastic waveguide: theory, numerics and experiments, Inverse Problems, 2018)

[2] Méthodes d'échantillonnage appliquées à l'imagerie de défauts dans un guide d'ondes élastiques (Arnaud Recoquillay, thèse de doctorat de l'Université Paris-Saclay, 2018)

[3] Laurent Bourgeois, Jean-François Fritsch, Arnaud Recoquillay, Imaging junctions of waveguides, Inverse Problems and Imaging, 2020

[4] Vahan Baronian, Anne-Sophie Bonnet-Ben Dhia, Éric Lunéville, Transparent boundary conditions for the harmonie diffraction problem in an elastic waveguide, Journal of Computational and Applied Mathematics, 2010

**Revendications**

1. Méthode d'imagerie d'une structure (100) composée d'au moins un guide d'onde (101,102,103) connecté à une jonction (104), la structure supportant des modes de propagation guidée d'ondes élastiques, la structure (100) comportant au moins un défaut, la méthode comprenant les étapes suivantes :

   - Pour au moins une fréquence de fonctionnement, acquérir (400) plusieurs mesures de signaux se propageant dans la structure (100) au moyen d'une pluralité de couples de capteurs (110,111) d'ondes élastiques non-colocalisés, les mesures étant organisées dans une matrice de mesures $\mathcal{M}$ de dimensions égales au nombre de capteurs émetteur par le nombre de capteurs récepteur,
   - Déterminer (401) une pluralité de modes de propagation guidée par la structure,
   - Corriger (402) les mesures à partir de signaux ultrasonores mesurés ou simulés pour la même structure (100) en l'absence de défaut,

   - Convertir (403,404) la matrice de mesures $\mathcal{M}$ en une matrice de diffraction de champs d'ondes U,
   - Déterminer en chaque point d'une grille d'échantillonnage (405) un vecteur de test F caractéristique de la structure (100) sans défaut, dont les composantes sont les projections d'un tenseur de Green du domaine sans défaut sur les fonctions transverses des modes de propagation guidée,
   - Appliquer (406) une méthode d'inversion numérique pour déterminer un vecteur H de composantes modales tel que U.H=F en chaque point d'une grille d'échantillonnage,
   - Déterminer (407) une image de la structure à partir du vecteur H.

2. Méthode d'imagerie selon la revendication 1 dans laquelle la matrice de diffraction U est déterminée au moyen de la relation $\mathcal{M} = -\mathcal{R}U\mathcal{E}$ avec $\mathcal{R}$ une matrice dont les coefficients sont déterminés par la projection d'une fonction de réception d'un capteur sur les modes de propagation guidée et $\varepsilon$ une matrice dont les coefficients sont déterminés par la projection d'une fonction d'émission d'un capteur sur les modes de propagation guidée.

3. Méthode d'imagerie selon l'une quelconque des revendications précédentes dans laquelle le vecteur de test F est déterminé (405) en :

- Calculant des champs d'onde de référence correspondant à des sommes de champs d'onde incidents et de champs d'onde diffractés par la jonction (104) en l'absence de défaut dans la structure (100),
- Déterminant le vecteur de test F à partir des champs d'onde de référence calculés.

4. Méthode d'imagerie selon la revendication 3 dans laquelle les champs d'onde de référence sont calculés au moyen d'une résolution numérique par éléments finis.

5. Méthode d'imagerie selon la revendication 4 dans laquelle les champs d'onde de référence sont calculés au moyen d'une résolution numérique par éléments finis dans une zone définie par la jonction (104) puis sont propagés analytiquement dans chaque guide d'onde (101,102,103).

6. Méthode d'imagerie selon la revendication 5 dans laquelle les champs d'onde de référence dans chaque guide d'onde sont calculés à partir des champs d'onde de référence dans la jonction au moyen des étapes suivantes :

- Déterminer les champs d'onde diffractés par la jonction à partir des champs d'onde de référence,
- Propager les champs d'onde diffractés par la jonction dans chaque guide d'onde en calculant la somme des modes de propagation guidée pondérés par les coefficients modaux des champs d'onde diffractés,
- Déterminer les champs d'onde de référence dans chaque guide d'onde comme la somme des champs d'onde diffractés propagés et des modes de propagation guidée.

7. Méthode d'imagerie selon l'une quelconque des revendications précédentes dans laquelle l'image de la structure est déterminée à partir de l'inverse de la norme du vecteur H en tout point de la structure à imager.

8. Méthode d'imagerie selon l'une quelconque des revendications 1 à 6 dans laquelle les étapes de la méthode sont exécutées pour plusieurs fréquences de fonctionnement.

9. Méthode d'imagerie selon la revendication 8 dans laquelle l'imagerie de la structure est déterminée à partir d'une somme des normes au carré des vecteurs H calculés pour différentes fréquences de fonctionnement, en tout point de la structure à imager.

10. Méthode d'imagerie selon l'une quelconque des revendications précédentes dans laquelle les capteurs d'ondes élastiques sont positionnés à la surface de la structure ou intégrés à la structure.

11. Dispositif d'imagerie comprenant un réseau de capteurs d'ondes élastiques destinés à être positionnés sur une structure à imager et une unité de traitement apte à recevoir les signaux acquis par les capteurs et configurée pour exécuter les étapes de la méthode d'imagerie selon l'une quelconque des revendications précédentes.

12. Dispositif d'imagerie selon la revendication 11 dans lequel les capteurs d'ondes élastiques sont choisis parmi des transducteurs piézoélectriques, des transducteurs acoustiques électromagnétiques ou des capteurs à réseau de Bragg sur fibre optique.

13. Dispositif d'imagerie selon l'une quelconque des revendications 11 ou 12 dans lequel les capteurs d'ondes élastiques sont positionnés à la surface de la structure ou intégrés à la structure.

**Patentansprüche**

1. Verfahren zum Abbilden einer Struktur (100) bestehend aus mindestens einem Wellenleiter (101, 102, 103), der mit einem Knotenpunkt (104) verbunden ist, wobei die Struktur geführte Ausbreitungsmoden elastischer Wellen unterstützt, wobei die Struktur (100) mindestens einen Defekt aufweist, wobei das Verfahren die folgenden Schritte umfasst:

- Erfassen (400), für mindestens eine Betriebsfrequenz, mehrerer Messwerte von sich in der Struktur (100) ausbreitenden Signalen mittels einer Vielzahl von Paaren von nicht kolokalisierten Sensoren (110, 111) für elastische Wellen, wobei die Messwerte in einer Messmatrix $\mathcal{M}$ organisiert werden, deren Dimensionen gleich der Anzahl von Sendersensoren durch die Anzahl von Empfängersensoren sind,
- Bestimmen (401) einer Vielzahl von durch die Struktur geführten Ausbreitungsmoden,
- Korrigieren (402) der Messwerte auf der Basis von Ultraschallsignalen, die für dieselbe Struktur (100) in Abwesenheit eines Defekts gemessen oder simuliert wurden,
- Umwandeln (403, 404) der Messmatrix $\mathcal{M}$ in eine Beugungsmatrix von Wellenfeldern U,
- Bestimmen, an jedem Punkt eines Abtastrasters (405), eines für die defektfreie Struktur (100) charakteristischen Testvektors F, dessen Komponenten die Projektionen eines Green-Tensors des defektfreien Bereichs auf die Querfunktionen der geführten Ausbreitungsmoden sind,
- Anwenden (406) einer numerischen Inversionsmethode zum Bestimmen eines Vektors H von Modalkomponenten, so dass an jedem Punkt eines Abtastrasters U.H=F,
- Bestimmen (407) eines Bildes der Struktur auf der Basis des Vektors H.

2. Bildgebungsverfahren nach Anspruch 1, wobei die Beugungsmatrix U mittels der Beziehung $\mathcal{M} = -\mathcal{R}U\mathcal{E}$ bestimmt wird, wobei R eine Matrix ist, deren Koeffizienten durch die Projektion einer Empfangsfunktion eines Sensors auf die geführten Ausbreitungsmoden bestimmt werden, und $\varepsilon$ eine Matrix ist, deren Koeffizienten durch die Projektion einer Sendefunktion eines Sensors auf die geführten Ausbreitungsmoden bestimmt werden.

3. Bildgebungsverfahren nach einem der vorhergehenden Ansprüche, wobei der Testvektor F bestimmt wird (405) durch:

- Berechnen von Referenzwellenfeldern, die Summen von einfallenden Wellenfeldern und durch den Knotenpunkt (104) gebeugten Wellenfeldern in Abwesenheit eines Defekts in der Struktur (100) entsprechen,
- Bestimmen des Testvektors F auf der Basis der berechneten Referenzwellenfelder.

4. Bildgebungsverfahren nach Anspruch 3, wobei die Referenzwellenfelder mithilfe einer numerischen Finite-Elemente-Auflösung berechnet werden.

5. Bildgebungsverfahren nach Anspruch 4, wobei die Referenzwellenfelder mittels einer numerischen Finite-Elemente-Auflösung in einer durch den Knotenpunkt (104) definierten Zone berechnet werden und sich dann analytisch in jedem Wellenleiter (101, 102, 103) ausbreiten.

6. Bildgebungsverfahren nach Anspruch 5, wobei die Referenzwellenfelder in jedem Wellenleiter auf der Basis der Referenzwellenfelder in dem Knotenpunkt mittels folgender Schritte berechnet werden:

- Bestimmen der am Knotenpunkt gebeugten Wellenfelder auf der Basis der Referenzwellenfelder,
- Ausbreiten der durch den Knotenpunkt gebeugten Wellenfelder in jedem Wellenleiter durch Berechnen der Summe der geführten Ausbreitungsmoden, die mit den Modalkoeffizienten der gebeugten Wellenfelder gewichtet sind,
- Bestimmen der Referenzwellenfelder in jedem Wellenleiter als die Summe der ausgebreiteten gebeugten Wellenfelder und der geführten Ausbreitungsmoden.

7. Bildgebungsverfahren nach einem der vorhergehenden Ansprüche, wobei das Bild der Struktur auf der Basis des Kehrwerts der Norm des H-Vektors an jedem beliebigen Punkt der abzubildenden Struktur bestimmt wird.

8. Bildgebungsverfahren nach einem der Ansprüche 1 bis 6, wobei die Schritte des Verfahrens für mehrere Betriebsfrequenzen ausgeführt werden.

9. Bildgebungsverfahren nach Anspruch 8, wobei die Abbildung der Struktur auf der Basis einer Summe der quadrierten Normen der für verschiedene Betriebsfrequenzen berechneten H-Vektoren an jedem beliebigen Punkt der abzubildenden Struktur bestimmt wird.

10. Bildgebungsverfahren nach einem der vorhergehenden Ansprüche, wobei die Sensoren für elastische Wellen auf der Oberfläche der Struktur positioniert oder in die Struktur integriert sind.

**11.** Bildgebungsvorrichtung, die eine Anordnung von zum Positionieren auf einer abzubildenden Struktur bestimmten Sensoren für elastische Wellen und eine Verarbeitungseinheit umfasst, die zum Empfangen der von den Sensoren erfassten Signale ausgelegt und zum Ausführen der Schritte des Bildgebungsverfahrens nach einem der vorhergehenden Ansprüche konfiguriert ist.

**12.** Bildgebungsvorrichtung nach Anspruch 11, wobei die Sensoren für elastische Wellen aus piezoelektrischen Wandlern, elektromagnetischen akustischen Wandlern und faseroptischen Bragg-Gitter-Sensoren ausgewählt sind.

**13.** Bildgebungsvorrichtung nach Anspruch 11 oder 12, wobei die Sensoren für elastische Wellen auf der Oberfläche der Struktur positioniert oder in die Struktur integriert sind.

**Claims**

**1.** Method for imaging a structure (100) composed of at least one wave guide (101, 102, 103) connected to a junction (104), the structure supporting elastic wave guided propagation modes, the structure (100) having at least one defect, the method comprising the following steps:

- for at least one operating frequency, acquiring (400) several measurements of signals propagating in the structure (100) by means of a plurality of pairs of non-colocalized elastic wave sensors (110, 111), the measurements being organized in a measurement matrix $\mathcal{M}$ with dimensions equal to the number of transmitting sensors by the number of receiving sensors,
- determining (401) a plurality of propagation modes guided by the structure,
- correcting (402) the measurements on the basis of ultrasound signals measured or simulated for the same structure (100) in the absence of any defect,
- converting (403, 404) the measurement matrix $\mathcal{M}$ into a wave field scattering matrix U,
- determining, at each point of a sampling grid (405), a test vector F characteristic of the structure (100) without any defect, the components of which are the projections of a Green tensor from the defect-free domain onto the transverse functions of the guided propagation modes,
- applying (406) a numerical inversion method to determine a vector H of modal components such that U.H=F at each point of a sampling grid,
- determining (407) an image of the structure on the basis of the vector H.

**2.** Imaging method according to claim 1, wherein the scattering matrix U is determined by means of the relationship $\mathcal{M} = -\mathcal{R}U\mathcal{E}$ where $\mathcal{R}$ is a matrix whose coefficients are determined by the projection of a reception function of a sensor onto the guided propagation modes and $\varepsilon$ is a matrix whose coefficients are determined by the projection of a transmission function of a sensor onto the guided propagation modes.

**3.** Imaging method according to any one of the preceding claims, wherein the test vector F is determined (405) by:

- calculating reference wave fields corresponding to sums of incident wave fields and wave fields scattered by the junction (104) in the absence of any defect in the structure (100),
- determining the test vector F on the basis of the calculated reference wave fields.

**4.** Imaging method according to claim 3, wherein the reference wave fields are calculated by means of a finite element numerical solution.

**5.** Imaging method according to claim 4, wherein the reference wave fields are calculated by means of a finite element numerical solution in a region defined by the junction (104) and are then propagated analytically in each wave guide (101, 102, 103).

**6.** Imaging method according to claim 5, wherein the reference wave fields in each wave guide are calculated on the basis of the reference wave fields in the junction by means of the following steps:

- determining the wave fields scattered by the junction on the basis of the reference wave fields,
- propagating the wave fields scattered by the junction in each wave guide by calculating the sum of the guided propagation modes weighted by the modal coefficients of the scattered wave fields,
- determining the reference wave fields in each wave guide as the sum of the propagated scattered wave fields and of the guided propagation modes.

**7.** Imaging method according to any one of the preceding claims, wherein the image of the structure is determined on the basis of the inverse of the norm of the vector H at any point of the structure to be imaged.

**8.** Imaging method according to any one of claims 1 to 6, wherein the steps of the method are executed for several operating frequencies.

**9.** Imaging method according to claim 8, wherein the imaging of the structure is determined on the basis of a sum of the squared norms of the vectors H calculated for various operating frequencies, at any point of the structure to be imaged.

**10.** Imaging method according to any one of the preceding claims, wherein the elastic wave sensors are positioned on the surface of the structure or integrated into the structure.

**11.** Imaging device comprising an array of elastic wave sensors intended to be positioned on a structure to be imaged and a processing unit able to receive the signals acquired by the sensors and configured to execute the steps of the imaging method according to any one of the preceding claims.

**12.** Imaging device according to claim 11, wherein the elastic wave sensors are chosen from among piezoelectric transducers, electromagnetic acoustic transducers or fibre Bragg grating sensors.

**13.** Imaging device according to any one of claims 11 or 12, wherein the elastic wave sensors are positioned on the surface of the structure or integrated into the structure.

FIG.1

FIG.2

Mesures capteurs — 400

Choix fréquence et calcul modes guidés — 401

Correction mesures — 402

Détermination matrices E et R — 403

Détermination matrice de diffraction U — 404

Détermination vecteur de test F — 405

Détermination vecteur H — 406

Détermination image défaut — 407

FIG.3

FIG.4

FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **VAHAN BARONIAN ; LAURENT BOURGEOIS ; BASTIEN CHAPUIS ; ARNAUD RECOQUILLAY.** Linear Sampling Method applied to Non Destructive Testing of an elastic waveguide: theory, numerics and experiments. *Inverse Problems,* 2018
- **ARNAUD RECOQUILLAY.** Méthodes d'échantillonnage appliquées à l'imagerie de défauts dans un guide d'ondes élastiques. *thèse de doctorat de l'Université Paris-Saclay,* 2018
- **LAURENT BOURGEOIS ; JEAN-FRANÇOIS FRITSCH ; ARNAUD RECOQUILLAY.** Imaging junctions of waveguides. *Inverse Problems and Imaging,* 2020
- **VAHAN BARONIAN ; ANNE-SOPHIE BONNET-BEN DHIA ; ÉRIC LUNÉVILLE.** Transparent boundary conditions for the harmonie diffraction problem in an elastic waveguide. *Journal of Computational and Applied Mathematics,* 2010